# EUROPÄISCHE PATENTSCHRIFT

(11) **EP 4 587 722 B1**
(45) Veröffentlichungstag und Bekanntmachung des Hinweises auf die Patenterteilung: **01.07.2026**
(21) Anmeldenummer: 23767839.6
(22) Anmeldetag: 04.09.2023
(51) Int. Cl.: F16B 31/02

(54) **SCHRAUBE, SCHRAUBVERBINDUNG UND FAHRZEUGKUPPLUNG MIT EINER DERARTIGEN SCHRAUBVERBINDUNG**
SCREW, SCREW CONNECTION, AND VEHICLE COUPLING COMPRISING SUCH A SCREW CONNECTION
VIS, LIAISON PAR VIS ET ACCOUPLEMENT DE VÉHICULE COMPRENANT UNE TELLE LIAISON PAR VIS

(30) Priorität: 15.09.2022 DE 102022123644
(43) Veröffentlichungstag der Anmeldung: 23.07.2025
(73) Patentinhaber: Trailer Dynamics GmbH, 52249 Eschweiler (DE)
(72) Erfinder: JABER, Abdullah, 52066 Aachen (DE); MUSTAFA, Jakob, 52134 Herzogenrath (DE)
(74) Vertreter: Acaroglu, Orkun
(86) Internationale Anmeldenummer: PCT/EP2023/074213
(87) Internationale Veröffentlichungsnummer: WO 2024/056432

(56) Entgegenhaltungen:
- DE-A1- 102020 126 374
- JP-A- 2005 091 086

## Beschreibung

Die Erfindung betrifft eine Schraube gemäß dem Oberbegriff von Anspruch 1 sowie eine Schraubverbindung mit einer derartigen Schraube und eine Fahrzeugkupplung mit einer entsprechenden Schraubverbindung.

Schrauben mit integrierten Messeinrichtungen, die zumindest einen Dehnmessstreifen umfassen, werden zur Kraftmessung in unterschiedlichen Anwendungsfällen eingesetzt. Ein Anwendungsfall kann dabei die Drehmomenterfassung während der Montage sein, ein anderer Anwendungsfall kann die Erfassung der auf die montierte Schraubverbindung wirkenden Kräfte sein.

Aus DE 10 2020 126 374 A1 ist eine Schraube mit einer einen Dehnmessstreifen umfassenden Messeinrichtung bekannt, die insbesondere in Fahrzeugkupplungen wie Sattelkupplungen und Maulkupplungen eingesetzt wird, um die während des Fahrbetriebs auf die Fahrzeugkupplung wirkenden Kräfte zu erfassen. Dafür ist der Dehnmesstreifen in einer Bohrung positioniert, die zentrisch im Schraubenschaft ausgebildet ist und sich von einem dem Schraubenkopf abgewandten Ende bis zum Schraubenkopf erstreckt. Der Dehnmesstreifen ist dabei in einem sich an den Schraubenkopf anschließenden Abschnitt des Schraubenkopfs angeordnet und soll eine Dehnung der Schraube erfassen, die durch die auf die Schraube wirkenden Kräfte hervorgerufen wird.

Eine derartige Schraube arbeitet an sich zufriedenstellen.

Der Erfindung liegt nun die Aufgabe zu Grunde, eine höhere Messempfindlichkeit zu ermöglichen.

Diese Aufgabe wird durch eine Schraube mit den Merkmalen des Anspruchs 1, einer Schraubverbindung mit den Merkmalen des Anspruchs 7 sowie einer Fahrzeugkupplung mit den Merkmalen des Anspruchs 10 gelöst. Vorteilhafte Ausgestaltungen sind Gegenstand der Unteransprüche.

Bei einer Schraube mit einem Schraubenkopf und einem sich an den Schraubenkopf entlang einer Schraubenachse anschließenden Schraubenschaft mit einem dem Schraubenkopf zugewandten Ende und einem dem Schraubenkopf abgewandten Ende, wobei zumindest benachbart zum abgewandten Ende des Schraubenschafts ein Gewindeabschnitt mit einem Gewinde ausgebildet ist und entlang oder im Inneren des Schraubenschaftes eine Messeinrichtung mit einem Dehnmessstreifen angeordnet ist, ist erfindungsgemäß vorgesehen, dass der Dehnmessstreifen im Gewindeabschnitt und näher am abgewandten Ende als am zugewandten Ende angeordnet ist und eine Kompression des Schraubenschafts insbesondere in Richtung zur Schraubenachse erfasst.

Anstatt wie im Stand der Technik üblich eine Dehnung der Schraube bzw. des Schraubenschaftes zu sensieren, wird durch die Positionierung des Dehnmessstreifens in der Nähe des abgewandten Endes eine dort von der Kraftwirkung auf das Gewinde hervorgerufene Kompression des Schraubenschaftes erfasst. Diese Verformung ist im Vergleich zu näher am Schraubenkopf auftretenden Dehnungen des Schraubenschaftes bei gleichen Anzugsmomenten bzw. Zugkräften um ein mehrfaches größer. Dadurch ergibt sich eine höhere Messempfindlichkeit, wodurch sich Änderungen der Kompression, die auf sich ändernde auf die Schraube wirkende Kräfte zurückzuführen sind, gut erfasst werden können.

Der Dehnmessstreifen ist dabei bevorzugterweise quer zur Schraubenlängsachse angeordnet. Eine Mess- bzw. Erfassungsrichtung liegt also quer zur Schraubenlängsachse. Damit werden nicht, wie im Stand der Technik üblich, Dehnungen parallel zur Schraubenlängsachse erfasst, sondern eine Kompression bzw. Stauchung quer zur Schraubenlängsachse. Diese wird durch die Kräfte zwischen dem Gewinde der Schraube und einem Gegengewinde hervorgerufen, die zu einer Gleitbewegung zwischen den jeweiligen Gewindeflanken führen und schließlich eine Kompression des Schraubenschaftes bewirken.

Bevorzugterweise beträgt ein Abstand zwischen einem Beginn des Gewindes am abgewandten Ende und dem Dehnmesstreifen einem 0,5- bis 20-fachen, insbesondere einem 0,5- bis 10-fachen oder 0,5- bis 5-fachen einer Gewindesteigung des Gewindes. Eine Kompression des Schraubenschaftes tritt am stärksten an den äußersten Gewindegängen des Gewindes auf, die mit einem Gegengewinde in Eingriff stehen. Mit zunehmender Annährung an den Schraubenkopf wird diese Kompression mehr und mehr von einer Materialdehnung überlagert, bis überhaupt keine Kompression, sondern ausschließlich eine Dehnung vorliegt. Durch die Anordnung des Dehnmessstreifens in den angegebenen Abstand nahe am Beginn des Gewindes wird der Einfluss der Dehnung geringgehalten und eine hohe Empfindlichkeit erreicht.

In einer vorteilhaften Ausgestaltung ist der Dehnmesstreifen im Inneren des Schraubenschafts, insbesondere in einer vom abgewandten Ende entlang der Schraubenachse verlaufenden Bohrung des Schraubenschafts, angeordnet. Der Dehnmessstreifen ist dadurch vor äußeren Einflüssen geschützt. Gleichzeitig kann die Schraube in übliche Gegengewinde eingeschraubt werden.

Dabei ist besonders bevorzugt, dass sich die Bohrung nur über den Gewindeabschnitt erstreckt. Alternativ oder zusätzlich kann sich die Bohrung vorzugsweise über weniger als 1/2, insbesondere weniger als 1/3 oder 1/4 einer Länge des Schraubenschafts erstrecken. Die mechanische Festigkeit und Struktur der Schraub wird dadurch im Wesentlichen beibehalten. Die Schraube kann daher hohe Kräfte aufnehmen bzw. übertragen.

Vorteilhafterweise sind im Bereich des abgewandten Endes zwei elektrische Anschlüsse der Messeinrichtung angeordnet. Diese können beispielsweise derart angeordnet und ausgebildet sein, dass sie beim Einbringen der sensorischen Schraube in eine Fassung mit zwei korrelierenden elektrischen Kontakten der Fassung in Kontakt treten. Im einfachsten Fall können die elektrischen Anschlüsse aber auch in Form von Kabeln aus dem abgewandten Ende des Schraubenschafts herausgeführt sein.

Vorzugsweise weist der Schraubenschaft anschließend an den Schraubenkopf einen glattwandigen Abschnitt mit konstanten Durchmesser auf. Das Gewinde erstreckt sich somit nicht über den gesamten Schraubenschaft. Verspannungen werden so vermieden bzw. reduziert.

Vorzugsweise weist die Schraube ein genormtes Gewinde, insbesondere ein metrisches oder Zollgewinde auf. Bei einem metrischen Winkel liegt ein Flankenwinkel des Gewindes beispielsweise etwa bei 60°. Über einen derartigen Flankenwinkel wird über die auf die Schraube bzw. Schraubverbindung einwirkenden Kräfte eine ausreichende Kompression des Schraubenschafts erreicht.

Die Messeinrichtung umfasst vorzugsweise eine Signalelektronik, die insbesondere eine Viertelbrucke, einen Signalverstärker und einen Signalwandler aufweist. Die Signalelektronik kann dadurch direkt mit dem Dehnmessstreifen verbunden werden, so dass eine nahezu verlustfreie Übertragung des analogen Signals des Dehnmesstreifen zur Signalelektronik möglich ist, die üblicherweise daraus ein aufgearbeitetes digitales Signal generiert. Dadurch können auch relativ schwache Ausgangssignale zuverlässig und relativ störungsfrei verarbeitet werden. Ferner kann mit geringem Aufwand eine Selbstkalibrierung erfolgen.

Die Messeinrichtung kann auch noch einen oder mehrere weitere Sensoren, wie beispielsweise einen Temperatursensor aufweisen. Damit lassen sich temperaturbedingte Messfehler weitgehend verhindern und die Messergebnisse verbessern.

Die eingangs genannte Aufgabe wird durch eine Schraubverbindung mit einer Schraube wie oben beschrieben gelöst, wobei das Gewinde mit einem Gegengewinde in Eingriff steht und der Dehnmessstreifen im Gewindeabschnitt und näher am abgewandten Ende als am zugewandten Ende angeordnet ist und eine Kompression des Schraubenschafts insbesondere in Richtung der Schraubenachse erfasst. Das Gegengewinde kann dabei beispielsweise in Form einer Mutter ausgebildet sein oder in einem entsprechenden Element, wie einem Befestigungsflansch, eingeformt sein. Durch die Anordnung des Dehnmessstreifens im Gewindeabschnitt bzw. insbesondere in dem Bereich, in dem das Gewinde mit dem Gewinde in Eingriff steht, kann eine Kompression im Schraubenschaft und dessen Änderung bei sich ändernden Krafteinwirkungen gut detektiert werden.

Dabei ist besonders bevorzugt, dass der Dehnmessstreifen im Bereich eines äußeren Gewindeeingriffs positioniert ist. Im Bereich des äußeren Gewindeeingriffs treten die größten Kompressionen auf. Die Kompression nimmt von da in Richtung zum Schraubenkopf ab. Die Anordnung des Dehnmessstreifens im Bereich des oder der äußeren Gewindeeingriffe ermöglicht somit eine hohe Sensitivität.

Bevorzugterweise weist die Schraubverbindung eine Fassung auf, die insbesondere Kontaktflächen zur elektrischen Verbindung mit der Messeinrichtung aufweist. Damit ist eine einfache und zuverlässige Kontaktierung der Messeinrichtung möglich.

Die eingangs genannte Aufgabe wird auch durch eine Fahrzeugkupplung gelöst, wobei mindestens ein Kupplungselement über mindestens eine wie oben beschrieben ausgestaltete Schraubverbindung befestigt ist. Die über die Fahrzeugkupplung beim Betrieb zwischen dem Fahrzeug und einem Anhänger auftretenden Kräfte können so zuverlässig erfasst und ausgewertet werden.

Dabei ist besonders bevorzugt, dass die Fahrzeugkupplung als Sattelkupplung mit einem Königszapfen oder als Maulkupplung ausgebildet ist. Eine derartige Fahrzeugkupplung kann hohe Kräfte übertragen und ist damit auch für den Einsatz bei schweren Nutzfahrzeugen geeignet.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine Schraube in räumlicher Darstellung und
Fig. 2 einen Längsschnitt durch eine Schraube mit Messeinrichtung.

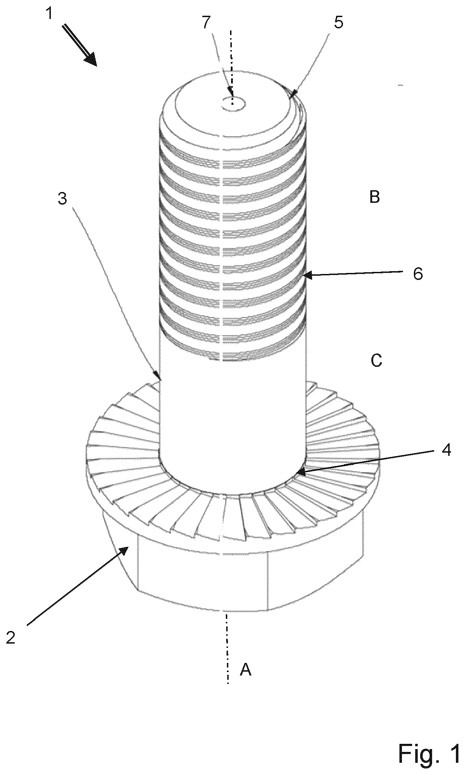

Fig. 1 zeigt eine Schraube 1 mit einem Schraubenkopf 2 und einem Schraubenschaft 3, der sich entlang einer Schraubenachse A erstreckt. Der Schraubenschaft 3 weist dabei ein dem Schraubenkopf 2 zugewandtes Ende 4 und ein dem Schraubenkopf 2 abgewandtes Ende 5 auf.

Benachbart zum abgewandten Ende 5 weist der Schraubenschaft 3 einen Gewindeabschnitt B mit einem Gewinde 6 auf, an den sich bis zum Schraubenkopf 2 ein glattwandiger Abschnitt C anschließt.

Ausgehend vom abgewandten Ende 5 erstreckt sich eine Bohrung 7 entlang der Schraubenachse A in den Schraubenschaft 3 hinein. Dabei ist bevorzugt, dass sich die Bohrung 7 nur über den Gewindeabschnitt, also nur einen Teil einer Länge des Schraubenschafts 3 erstreckt, um die Stabilität und Festigkeit der Schraube 1 möglichst wenig zu beeinträchtigen.

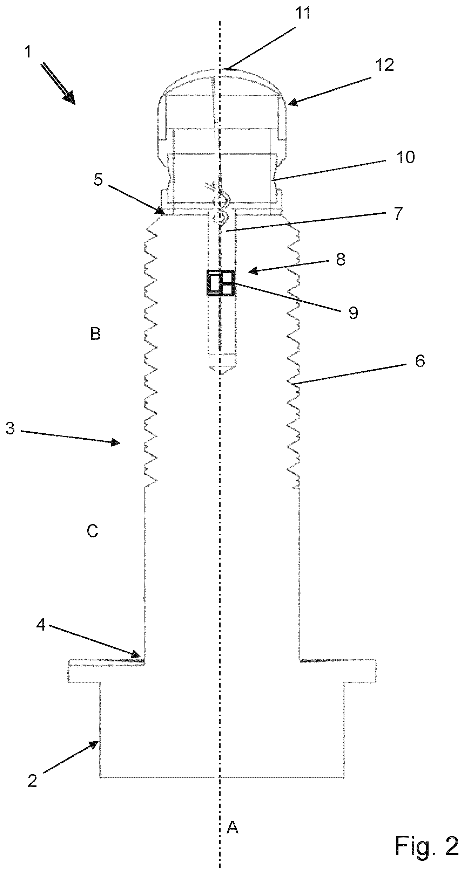

In Fig. 2 ist ein Längsschnitt der in Fig. 1 gezeigten Schraube 1 dargestellt. In der Bohrung 7, also im Inneren des Schraubenschaftes 3, ist eine Messeinrichtung 8 mit einem Dehnmessstreifen 9 angeordnet. Der Dehnmesstreifen 9 ist dabei quer zur Schraubenlängsachse A angeordnet, erfasst also Längenänderungen, die quer zur Schraubenlängsachse A erfolgen. Bei einer Kompression des Schraubenschaftes 3 wird der Dehnmessstreifen 9 gequetscht, was entsprechend detektiert wird. Anschlüsse 10, 11 der Messeinrichtung sind in einer Kappe 12 ausgebildet, die am endseitigen Ende 5 des Schraubenschafts 3 aufgesetzt ist. Über diese Anschlüsse kann eine Stromversorgung und gegebenenfalls auch eine Signalübertragung erfolgen.

Der Dehnmessstreifen 9 ist dabei im Bereich des Gewindeabschnitts B und dabei an dem am abgewandten Ende beginnenden Anfang des Gewindes angeordnet. Bei montierter Schraube liegt der Dehnmesstreifen 9 somit im Bereich eines äußeren Gewindeeingriffs. Damit liegt der Dehnmessstreifen in dem Bereich, in dem eine maximale Kompression der Schraube durch in Schraubenlängsachse wirkende Kräfte erfolgt. Diese Kompression wird dabei dadurch bewirkt, das Gewindeflanken des Gewindes der Schraube aufgrund der wirkenden Kräfte an Gewindeflanken eines Gegengewindes in Richtung Schraubenachse rutschen wollen.

Die erfindungsgemäße Schraube verbessert gegenüber vorbekannten sensorischen Schraube die Empfindlichkeit und vergrößert das Messspektrum. Dabei kann nicht nur ein Drehmomentanzugsmoment, sondern auch eine Zugbe- und entlastung erfasst werden. Diese Eigenschaften sind besonders vorteilhaft in Verbindung mit Fahrzeugkupplungen, wobei auf Basis der erfassten Kräfte eine Steuerung von (Hilfs-)Antrieben erfolgen kann. Dafür ist der Dehnmesstreifen an einer Position und in einer Orientierung in der Schraube positioniert, an der eine Materialkompression besonders ausgeprägt ist. Diese Position ist im Bereich des äußersten Gewindeeingriffs zwischen dem Gewinde der Schraube und einem Gegengewinde. Dabei wird ein nahezu linearer Zusammenhang zwischen Kompression und Zugbelastung ausgenutzt.

Die Erfindung ist nicht auf eine der vorbeschriebenen Ausführungsformen beschränkt, sondern in vielfältiger Weise abwandelbar. So kann die erfindungsgemäße Schraube beispielsweise nicht nur im Bereich von Fahrzeugkupplungen zur Erkennung der darauf wirkenden Kräfte eingesetzt werden, sondern beispielsweise auch zur Gewichtsbestimmung oder in Kompressions- und Verbrennungsmotoren zur Messung von Drehmomenten oder variabler Drücke im Motorbereich. Aber auch andere Anwendungsfälle sind denkbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Schraube
- 2: Schraubenkopf
- 3: Schraubenschaft
- 4: zugewandtes Ende
- 5: abgewandtes Ende
- 6: Gewinde
- 7: Bohrung
- 8: Messeinrichtung
- 9: Dehnmessstreifen
- 10: Anschluss
- 11: Anschluss
- 12: Kappe

- A: Schraubenachse
- B: Gewindeabschnitt
- C: glattwandiger Abschnitt

## Patentansprüche

1. Schraube (1) mit einem Schraubenkopf (2), einem sich an den Schraubenkopf (2) entlang einer Schraubenachse A anschließenden Schraubenschaft (3) mit einem dem Schraubenkopf (2) zugewandten Ende (4) und einem dem Schraubenkopf (2) abgewandten Ende (5), wobei zumindest benachbart zum abgewandten Ende (5) des Schraubenschafts (3) ein Gewindeabschnitt B mit einem Gewinde (6) ausgebildet ist, wobei entlang oder im Inneren des Schraubenschaftes (3) eine Messeinrichtung (8) mit einem Dehnmessstreifen (9) angeordnet ist, **dadurch gekennzeichnet, dass** der Dehnmessstreifen (9) im Gewindeabschnitt B und näher am abgewandten Ende (5) als am zugewandten Ende (4) angeordnet ist und eine Kompression des Schraubenschafts (3) insbesondere in Richtung zur Schraubenachse (A) erfasst.

2. Schraube nach Anspruch 1, **dadurch gekennzeichnet, dass** ein Abstand zwischen einem Beginn des Gewindes (6) am abgewandten Ende (5) und dem Dehnmesstreifen (9) einem 0,5- bis 20-fachen, insbesondere einem 1- bis 10-fachen einer Gewindesteigung des Gewindes (6) beträgt.

3. Schraube nach Anspruch 1 oder 2, **dadurch gekennzeichnet, dass** der Dehnmesstreifen (9) im Inneren des Schraubenschafts (3), insbesondere in einer vom abgewandten Ende (5) entlang der Schraubenachse A verlaufenden Bohrung (7) des Schraubenschafts (3) angeordnet ist.

4. Schraube nach Anspruch 3, **dadurch gekennzeichnet, dass** sich die Bohrung (7) über weniger als 1/2, insbesondere weniger als 1/3 oder 1/4 einer Länge des Schraubenschafts (3) erstreckt.

5. Schraube nach einem der vorhergehenden Ansprüche, **dadurch gekennzeichnet, dass** im Bereich des abgewandten Endes (5) zwei elektrische Anschlüsse (10, 11) der Messeinrichtung (8) angeordnet sind.

6. Schraube nach einem der vorhergehenden Ansprüche, **dadurch gekennzeichnet, dass** der Schraubenschaft (3) anschließend an den Schraubenkopf (2) einen glattwandigen Abschnitt C mit konstanten Durchmesser aufweist.

7. Schraubverbindung mit einer Schraube (1) nach einem der vorhergehenden Ansprüche, **dadurch gekennzeichnet, dass** das Gewinde (6) mit einem Gegengewinde in Eingriff steht, wobei der Dehnmessstreifen (9) im Gewindeabschnitt B und näher am abgewandten Ende (5) als am zugewandten Ende (4) angeordnet ist und eine Kompression des Schraubenschafts (3) insbesondere in Richtung zur Schraubenachse A erfasst.

8. Schraubverbindung nach Anspruch 7, **dadurch gekennzeichnet, dass** der Dehnmessstreifen (9) im Bereich eines äußeren Gewindeeingriffs positioniert ist.

9. Schraubverbindung nach Anspruch 7 oder 8, **dadurch gekennzeichnet, dass** sie eine Fassung aufweist, die insbesondere Kontaktflächen zur elektrischen Verbindung mit der Messeinrichtung (8) aufweist.

10. Fahrzeugkupplung, wobei mindestens ein Kupplungselement über mindestens eine Schraubverbindung nach einem der Ansprüche 7 bis 9 befestigt ist.

11. Fahrzeugkupplung nach Anspruch 10, **dadurch gekennzeichnet, dass** sie als Sattelkupplung mit einem Königszapfen oder als Maulkupplung ausgebildet ist.

## Claims

1. . A bolt (1) having a bolt head (2) and a bolt shank (3) which adjoins the bolt head (2) along a bolt axis A and has an end (4) facing the bolt head (2) and an end (5) remote from the bolt head (2), wherein a threaded portion B having a thread (6) is formed at least adjacent to the remote end (5) of the bolt shank (3), wherein a measuring device (8) having a strain gauge (9) is arranged along or in the interior of the bolt shank (3), **characterized in that** the strain gauge (9) is arranged in the threaded portion B and closer to the remote end (5) than to the head-facing end (4) and detects a compression of the bolt shank (3), in particular in the direction toward the bolt axis (A).

2. . The bolt as claimed in claim 1, **characterized in that** a distance between a start of the thread (6) at the remote end (5) and the strain gauge (9) is 0.5 to 20 times, in particular 1 to 10 times, a thread pitch of the thread (6).

3. . The bolt as claimed in claim 1 or 2, **characterized in that** the strain gauge (9) is arranged in the interior of the bolt shank (3), in particular in a bore (7), running along the bolt axis A from the remote end (5), of the bolt shank (3).

4. . The bolt as claimed in claim 3, **characterized in that** the bore (7) extends over less than 1/2, in particular less than 1/3 or 1/4, of a length of the bolt shank (3).

5. . The bolt as claimed in one of the preceding claims, **characterized in that** two electrical connections (10, 11) of the measuring device (8) are arranged in the region of the remote end (5).

6. . The bolt as claimed in one of the preceding claims, **characterized in that** the bolt shank (3) has, adjoining the bolt head (2), a smooth-walled portion C having a constant diameter.

7. . A bolted connection having a bolt (1) as claimed in one of the preceding claims, **characterized in that** the thread (6) is in engagement with a mating thread, wherein the strain gauge (9) is arranged in the threaded portion B and closer to the remote end (5) than to the head-facing end (4), and detects a compression of the bolt shank (3), in particular in the direction toward the bolt axis A.

8. . The bolted connection as claimed in claim 7, **characterized in that** the strain gauge (9) is positioned in the region of an external threaded engagement.

9. . The bolted connection as claimed in claim 7 or 8, **characterized in that** it has a socket which has in particular contact surfaces for electrical connection to the measuring device (8).

10. . A vehicle coupling, wherein at least one coupling element is fastened via at least one bolted connection as claimed in one of claims 7 to 9.

11. . The vehicle coupling as claimed in claim 10, **characterized in that** it is designed as a fifth-wheel coupling having a kingpin or as an open-end coupling.

## Revendications

1. Vis (1) comprenant une tête de vis (2), une tige de vis (3) se raccordant à la tête de vis (2) le long d'un axe de vis A, avec une extrémité (4) tournée vers la tête de vis (2) et une extrémité (5) opposée à la tête de vis (2), au moins une partie filetée B comportant un filetage (6) étant formée à proximité de l'extrémité opposée (5) de la tige de vis (3), un dispositif de mesure (8) muni d'une jauge de contrainte (9) étant disposé le long ou à l'intérieur de la tige de vis (3), **caractérisée en ce que** la jauge de contrainte (9) est disposée dans la partie filetée B et plus près de l'extrémité opposée (5) que de l'extrémité tournée vers la tête de vis (2) et détecte une compression de la tige de vis (3), en particulier dans la direction de l'axe de vis (A).

2. Vis selon la revendication 1, **caractérisée en ce qu'**une distance entre un début du filetage (6) à l'extrémité opposée (5) et la jauge de contrainte (9) est comprise entre 0,5 et 20 fois, en particulier entre 1 et 10 fois, le pas du filetage (6).

3. Vis selon la revendication 1 ou 2, **caractérisée en ce que** la jauge de contrainte (9) est disposée à l'intérieur de la tige de vis (3), en particulier dans un alésage (7) de la tige de vis (3) s'étendant depuis l'extrémité opposée (5) le long de l'axe de vis A.

4. Vis selon la revendication 3, **caractérisée en ce que** l'alésage (7) s'étend sur moins de la moitié, en particulier moins d'un tiers ou d'un quart de la longueur de la tige de vis (3).

5. Vis selon l'une des revendications précédentes, **caractérisée en ce que** deux connexions électriques (10, 11) du dispositif de mesure (8) sont disposées dans la zone de l'extrémité opposée (5).

6. Vis selon l'une des revendications précédentes, **caractérisée en ce que** la tige de vis (3) présente, à la suite de la tête de vis (2), une section C à paroi lisse et de diamètre constant.

7. Liaison par vis comprenant une vis (1) selon l'une des revendications précédentes, **caractérisée en ce que** le filetage (6) est en prise avec un contre-filetage, la jauge de contrainte (9) étant disposée dans la section de filetage B et plus près de l'extrémité opposée (5) que de l'extrémité tournée vers la tête de vis (4), et détectant une compression de la tige de vis (3), en particulier dans la direction de l'axe de vis A.

8. Liaison par vis selon la revendication 7, **caractérisé en ce que** la jauge de contrainte (9) est positionnée dans la zone d'un engagement fileté extérieur.

9. Liaison par vis selon la revendication 7 ou 8, **caractérisé en ce qu'**il comporte une douille qui présente notamment des surfaces de contact pour la connexion électrique avec le dispositif de mesure (8).

10. Accouplement de véhicule, dans lequel au moins un élément d'attelage est fixé par au moins une liaison par vis selon l'une des revendications 7 à 9.

11. Accouplement de véhicule selon la revendication 10, **caractérisé en ce qu'**il est conçu comme un accouplement à sellette avec un pivot central ou comme un accouplement à mâchoires.
